# EUROPEAN PATENT APPLICATION

(11) **EP 1 693 986 A1**
(43) Date of publication of application: **23.08.2006**
(21) Application number: 04802489.7
(22) Date of filing: 20.12.2004
(51) Int. Cl.: H04L 12/26

(54) **A MOBILE MONITOR-COLLECTING TERMINAL FOR REALIZING AUDIO/VIDEO MONITORING SERVICE AND THE RELATED COMMUNICATION SYSTEM AND METHOD**

(30) Priority: 22.12.2003 CN 200310121896
(71) Applicant: Zhang, Huiming, Toronto ON L4E 4J8 (CA); Wang, Wendong, Haidian District Beijing 100876 (CN)
(72) Inventor: Zhang, Huiming, Toronto ON L4E 4J8 (CA); Wang, Wendong, Haidian District Beijing 100876 (CN)
(74) Representative: Manitz, Gerhart
(86) International application number: PCT/CN2004/001476
(87) International publication number: WO 2005/062531

(57) **Abstract**

The present invention discloses a mobile monitor-collecting terminal that comprises a signal collecting module, a signal processing module, a signal duplex/mixing module, an interface controlling module and a function controlling module, and serves to monitor the target and collect the audio/video signals thereof, and delivers the collected audio/video information to the device(s) demanding the audio/video information of the monitored target via the wireless mobile communication network. The mobile monitor-collecting terminal is placed in the range of the monitored target. The present invention further discloses a communication system and the related method realizing the audio/video monitoring service, in which the service controlling terminal activates the monitor-collecting functions of a mobile monitor-collecting terminal on demand, and the mobile monitor-collecting terminal sends the collected audio/video information to the corresponding device. Application of the foregoing terminal, communication system and method can achieve monitoring the target at any place and at any time, and provide audio/video monitoring information of extensive coverage and accurate positioning to the user conveniently and flexibly.

## Description

### Field of the invention

The present invention relates to monitoring service, and particularly to a mobile monitor-collecting terminal for realizing audio/video monitoring service and its related communication system and method.

### Background of the invention

With the development of computer technologies and network technologies, the Internet has gradually evolved from a single service network, which can only provide data service, to a public information transmission platform, which can provide services to various user groups and can bear various services. On this public information transmission platform, applications such as Voice over IP (VoIP), multimedia service, wireless data service and network games have emerged one after another. Statistics indicate that audio/video service is becoming another hot-spot business on the Internet after VoIP. With such services, people at different places are able to achieve video and audio communication via the Internet. At present, the typical video service on the Internet mainly comprises video phone, video conference and streaming media service.

Currently, the booming development of wireless communication technologies dramatically accelerates the technological development of mobile communication networks. The existing wireless mobile communication networks have evolved into digital mode. Moreover, the digital mode has evolved from the 2G mobile communication network technologies such as GSM, CDMA to the 2.5G and 3G mobile communication network technologies such as General Packet Radio Service (GPRS), Enhanced Data GSM Environment (EDGE), CDMA 2000, WCDMA, and TD-SCDMA. The wireless mobile communication service, which has become the most vigorous communication service, has also developed from the original service of voice into the state of being able to provide not only voice service, but also data service and even some additional value-added services as well. Especially, the 2.5G mobile communication system being deployed and the 3G mobile communication system to be deployed have considered it very important for mobile communication service deployment to introduce and open the data service. For instance, due to their advanced technologies, the 2.5G and 3G wireless mobile communication networks are able to provide fine supporting platforms for various applications of data services, such as multimedia message services and multimedia Email services that have been already provided. The wireless mobile internet technology developed upon that base has also drawn much attention from people, and more innovative services derived thereof will drive the mobile communication networks to develop further.

The users hope that the providers can provide more value-added services or services with special features based upon the foregoing communication systems, for instance the monitoring service. The monitoring service means to monitor the target terminal or region at any moment according to various requirements in order to obtain real-time information of the monitored target. Currently, the monitoring service can be provided in the ways discussed hereunder:
1) Special monitoring system. The monitoring service in the past was mainly applied in some special situations demanding security guarantee, therefore, the real-time monitoring system is mostly a special system generally comprising two major parts: monitoring network and monitoring devices. Although the special system is able to meet a certain monitoring demands, the monitoring network as a special system is very poor in openness and expandability. Furthermore, the special system is very expensive, and is unable to exceed the scale of metropolitan area networks. Therefore, the service provided by the monitoring network just fits some specific corporations or users and is hard to gain wide-spread appeal. Moreover, except for the foregoing disadvantages, conventional real-time monitoring systems have limited functions, so that they can only be used to carry out monitoring, but not to carry out precise positioning. These systems have no characteristics of computer networks either.
2) Monitoring based upon the Internet. Real-time monitoring for certain demands, some of which are applied with a scale larger than metropolitan-area, can be provided via the Internet, because the Internet, which covers a wide area, is currently able to provide video service. For instance, the information of the monitored terminal can be provided by video phone or conference TV. However, these services are still constrained to some extent by the associated conditions because of the limitations of the Internet technologies. For instance, the video phone and video conference services are unable to obtain the long-lasting bandwidth demanded by the services, thereby have disadvantages in their service quality. Moreover, except for the foregoing disadvantages, the video monitoring applications achieved on the Internet are also constrained by the coverage of the Internet, these applications thereby are just able to monitor the terminals or areas that keep stationary and connect to the Internet. The monitoring service based upon the Internet will be inadequate when it is used to monitor a moving object or the monitored target moves, i.e., it is unable to monitor a moving object/surrounding for uninterrupted periods. The service is unable to precisely position the monitored targets either.
3) Positioning service achieved with the positioning service supported by GPS, SMS or MMS. Currently, the data services of SMS and MMS have created massive social and economic benefits for the providers. The demand for video information service in wireless environments is emerging, and the location-based services are deploying steadily. These data services are able to position some mobile terminals and return the positioning information to the monitoring center by short messages. Although these value-added services gain much attention from mobile operators and favor from users, they are just streaming media interaction between terminal systems and servers in the core networks. The end-to-end applications are constrained by technical limitations, and mobile video phone and video conference have not reached business application scale yet. The calling party and called party connected by the existing mobile video phone applications are functionally equal with no passive controlled function. Moreover, the positioning service is only able to achieve location-based services, but not to display the situation of the positioned area.

### Summary of the Invention

In view of the above, the present invention provides a mobile monitor-collecting terminal to monitor the target at any place and at any moment, so as to provide the monitoring information demanded by the user.

The present invention also provides a communication system realizing audio/video monitoring service that can make the best of the existing network resources to provide the users with convenient and flexible audio/video monitoring information of extensive area coverage and accurate positioning.

The present invention also provides a method realizing the audio/video monitoring service that can provide the users with end-to-end, real-time and precise audio/video monitoring information according to the users' demands so as to further realize the audio/video monitoring service in various environments.

### The specific technical solution of the present invention is achieved as follows:

A mobile monitor-collecting terminal, comprises:
a signal collecting module, which further comprises an audio collecting module and a video collecting module, and which serves to collect audio/video signals of a monitored target and to deliver the collected audio/video signals to a signal processing module;
the signal processing module, which further comprises an audio signal encoding and transmitting module, an audio signal processing controlling module, a video signal encoding and transmitting module and a video signal processing controlling module, and which serves to encode the collected audio/video signals and to transmit the processed audio/video signals via a signal duplex/mixing module and an interface controlling module;
the signal duplex/mixing module, which serves to carry out duplex, switching and transmission of the received service data information, including audio signals and video signals, and controlling information;
the interface controlling module, which serves to transmit the audio/video signals processed by the signal duplex/mixing module via the wireless mobile communication network and to receive controlling signals from the wireless mobile communication network;
a function controlling module, which further comprises an accessing subscriber authentication module and a system controlling interface module, and which serves to accomplish authentication and controlling functions;
the signal processing module, the interface controlling module and the function controlling module are directly connected with the signal duplex/mixing module.

Wherein, the function controlling module further comprises a signal collecting system controlled module that controls the audio signal collecting module and/or video signal collecting module to accomplish related operations according to controlling instructions. The audio signal collecting module is a microphone. The video signal collecting module is a common video camera or a video camera with a turntable. The related operation is adjusting the volume of audio signals while the audio signal collecting module is a microphone. The related operations are adjustment of the video camera's shooting direction, and/or, shooting angle and/or shooting focal length while the video signal collecting module is a video camera with a turntable. The monitored target comprises at least one of: a fixed or moving object, and a specific area.

Wherein, the wireless access modes supported by the interface controlling modules include but are not limited to GSM/GPRS/EDGE, CDMA, CDMA2000, WCDMA, and TD-SCDMA. The encoding modes supported by the video signal collecting module and the video signal encoding and transmitting module include but are not limited to MPEG-4, H.261, H.236, H.236+, H.264 video encoding protocols. The encoding modes supported by the audio signal collecting module and the audio signal encoding and transmitting module include but are not limited to EVRC, 3GPP-AMR, G.711, G.725, G.726, G.723.1, G.729, G.729A audio encoding protocols. The controlling or bearer protocols supported by the monitor-collecting terminal include but are not limited to H.324/H.245/H.223 protocol, or H.323/H.245 protocol, or SIP, or RTP/RTCP/UDP/IP.

A communication system realizing audio/video monitoring service, comprising a wireless mobile communication network, further comprises: at least one mobile monitor-collecting terminal, which serves to collect audio/video signals of a monitored target and to deliver the collected audio/video information to device(s) demanding the audio/video information of the monitored target via a wireless mobile communication network, and which is placed where the monitored target is; one or plural service controlling terminal(s), which serve(s) to activate or terminate the mobile monitor-collecting terminal's monitoring the monitored target and collecting the audio/video signals thereof.

Wherein, the service controlling terminal is a wireless mobile terminal with audio/video displaying function. The system further comprises: a wired communication network, which is connected with the wireless communication network, and is simultaneously connected with one or plural wired communication terminal(s). The wired communication network comprises at least one of: Internet/computer network, and wired telephone network. The wired telephone network is Public Switch Telephone Network (PSTN) and/or Integrated Service Digital Network (ISDN). The service controlling terminal comprises at least one of: a wireless mobile terminal with audio/video displaying function, and a wired communication terminal with audio/video displaying function. The service controlling terminal interacts with the mobile monitor-collecting terminal via its home wired communication network and the wireless mobile communication network while the service controlling terminal is a wired communication terminal with audio/video displaying function. The wireless mobile communication network is GSM, CDMA, GPRS, EDGE, CDMA2000, CDMA2000 1X, or WCDMA, or TD-SCDMA. The device demanding the audio/video information of the monitored target is the service controlling terminal that activates the corresponding mobile monitor-collecting terminal.

A method realizing audio/video monitoring service, which is applicable to a communication system comprising a bearer network at least including a wireless mobile communication network, at least one service controlling terminal and at least one mobile monitor-collecting terminal, wherein the mobile monitor-collecting terminal is placed where the monitored target is, comprises:
a. the service controlling terminal sending a service activating request to the target mobile monitor-collecting terminal via the bearer network;
b. the mobile monitor-collecting terminal receiving the service activating request carrying out authentication and starting to monitor its target and collect audio/video information thereof, and returning the collected audio/video information to device(s) demanding the audio/video information of the monitored target.

Wherein Step a specifically comprises:
a1. the service controlling terminal sends to the bearer network a service connection request carrying a subscriber/ID of the target mobile monitor-collecting terminal;
a2. the bearer network sends the service connection request to the target mobile monitor-collecting terminal, according to the subscriber/ID of the mobile monitor-collecting terminal carried in the service connection request, to build up service connection from the service controlling terminal to the called mobile monitor-collecting terminal;
a3. the called mobile monitor-collecting terminal sends to the bearer network a service connection confirming message;
a4. the bearer network returns to the service controlling terminal the service connection confirming message;
   the authentication in Step b specifically comprises:
b1. the mobile monitor-collecting terminal sends to the service controlling terminal an accessing authentication request before it starts to monitor its target;
b2. having received the accessing authentication request, the service controlling terminal sends to the mobile monitor-collecting terminal its accessing authentication password information;
b3. the mobile monitor-collecting terminal verifies the access authentication password information of the service controlling terminal, and if the verification is successful, it activates delivery of audio/video service stream so as to provide the audio/video information of the monitored target to the device demanding the information of the monitored target; otherwise, it refuses to deliver the audio/video service stream and releases the service connection.

The method further comprises:
the service controlling terminal sending to the mobile monitor-collecting terminal a service release request and releasing the local resources; the mobile monitor-collecting terminal terminating the service connection and releasing the associated resources after it receives the service release request.

The method further comprises after the service controlling terminal authentication is successful:
b11. the service controlling terminal sending to the mobile monitor-collecting terminal a terminal accessing authentication password information modifying request via the built-up service connection;
b12. the mobile monitor-collecting terminal returning a group of prompt information for modifying the terminal accessing authentication password information after it receives the service controlling terminal's access authentication password information modifying request;
b13. according to the prompt information for modifying the accessing authentication password information returned by the mobile monitor-collecting terminal, the service controlling terminal sending the corresponding accessing authentication password modifying information to modify the accessing authentication password and confirmation information;
b14. having received the complete access authentication password modifying information and verified its validity, the mobile monitor-collecting terminal sending to the service controlling terminal a verifying notification message, and terminating the process of modifying the accessing authentication password information.

The method further comprises after the service controlling terminal authentication is successful:
b21. the service controlling terminal sending to the mobile monitor-collecting terminal an audio/video controlling mode modifying request, carrying the controlling mode modifying information;
b22. the mobile monitor-collecting terminal receiving the service controlling terminal's controlling mode modifying request and accomplishing controlling and adjustment of the associated parts according to the controlling mode modifying information carried in the request, then returning to the service controlling terminal a corresponding verifying notification message.

The method further comprises:
the service controlling terminal sending to the mobile monitor-collecting terminal a service release request and releasing the local resources; the mobile monitor-collecting terminal terminating the service connection and releasing the associated resources after it receives the service release request.

The method further comprises after the service controlling terminal authentication is successful:
b21. the service controlling terminal sending to the mobile monitor-collecting terminal an audio/video controlling mode modifying request, carrying the controlling mode modifying information;
b22. the mobile monitor-collecting terminal receiving the service controlling terminal's controlling mode modifying request and accomplishing controlling and adjustment of the associated parts according to the controlling mode modifying information carried in the request, then returning to the service controlling terminal a corresponding verifying notification message.

The method further comprises:
the service controlling terminal sending to the mobile monitor-collecting terminal a service release request and releasing the local resources; the mobile monitor-collecting terminal terminating the service connection and releasing the associated resources after it receives the service release request.

Wherein, the device demanding the audio/video information of the monitored target is the service controlling terminal that sends the service activating request to the mobile monitor-collecting terminal.

The present invention's mobile monitor-collecting terminal and the related communication system and method realizing the audio/video monitoring service is a network system and method that provides the users with simple but highly efficient audio/video monitoring services, relying on the bearing capability of data services of the wireless mobile communication networks. To be specific, a standard wireless mobile terminal with the capability of streaming media collection and transmission is designed as the monitor-collecting terminal of the service network system by making use of the mature audio/video encoding and transmitting technologies, of the data bearing capability of wireless mobile terminals, and of the characteristics of mobility and positioning ability of mobile terminals, The monitor-collecting terminal with the foregoing functions can be placed by the user at the target site or on the target object that lies within the serving area of the existing wireless mobile communication networks, after which the user can carry out a real-time monitoring of the target via the network at any moment. The present invention has the advantages and characteristics listed hereunder:
1) The present invention's mobile monitor-collecting terminal is placed at the target site or on the target object that lies within the serving area of the existing wireless mobile communication networks, then the target can be monitored by the user in real-time via the network at any moment upon demand. Therefore, the existing resources of the wireless mobile communication networks and the characteristics of other existing networks are sufficiently utilized and exerted to realize an end-to-end audio/video monitoring service.
2) The present invention, integrating the advantages of the wireless mobile communication network, Internet, GPS and special systems, takes the wireless mobile communication networks as the service platform for the present invention's audio/video monitoring service so that the innovative real-time monitoring service is supported by a world-wide network with powerful functions and a wide serving area.
3) In the present invention, the networks already exist, and the mobile monitor-collecting terminal is the only new part to be researched and developed. Featuring a simple structure, low cost, and sufficient utilization of the existing network resources, the network system ensures high coverage of area, broad range of services, excellent openness and expandability for the service. The service is able to achieve simultaneous monitoring and positioning of moving targets in the serving area of the global mobile communication networks.
4) In the present invention, the structure of the mobile monitor-collecting terminal is simple. The mobile monitor-collecting terminal comprises modularized circuits, all of which are mature products that are reliable in operation and easily achievable without technical difficulties. Its cost can be dramatically lowered in batch production. These factors are favorable for popularization and application of the audio/video monitoring service.
5) The method realizing the present invention's solution, which is based on expanded applications of the existing communication protocols, is simple and practical. The operation of the method is stable and reliable.

In summary, the mobile monitor-collecting terminal, the related monitoring system and the related monitoring method of the present invention will provide the wireless operators with an innovative telecommunication service that has a promising future for applications.

### Brief description of the drawings

Fig. 1 is a schematic diagram illustrating the composition structure of the mobile monitor-collecting terminal in the present invention.
Fig. 2 is a schematic diagram illustrating the network composition structure of the audio/video monitoring service in the present invention.
Fig. 3 is a schematic diagram illustrating the specific operation steps of the method realizing the audio/video monitoring service in the present invention.
Fig. 4 is a schematic diagram illustrating the network composition structure when a mobile terminal device initiates the audio/video monitoring service.
Fig. 5 is a schematic diagram illustrating the network composition structure when a fixed terminal device initiates the audio/video monitoring service.
Fig. 6 is a schematic diagram illustrating the network composition structure when an Internet terminal device initiates the audio/video monitoring service.

### Detailed Description of Embodiments

In order to make the objective, the technical solution and the advantage of the present invention clear, a detailed description of the present invention is hereinafter given with reference to the attached drawings and embodiments.

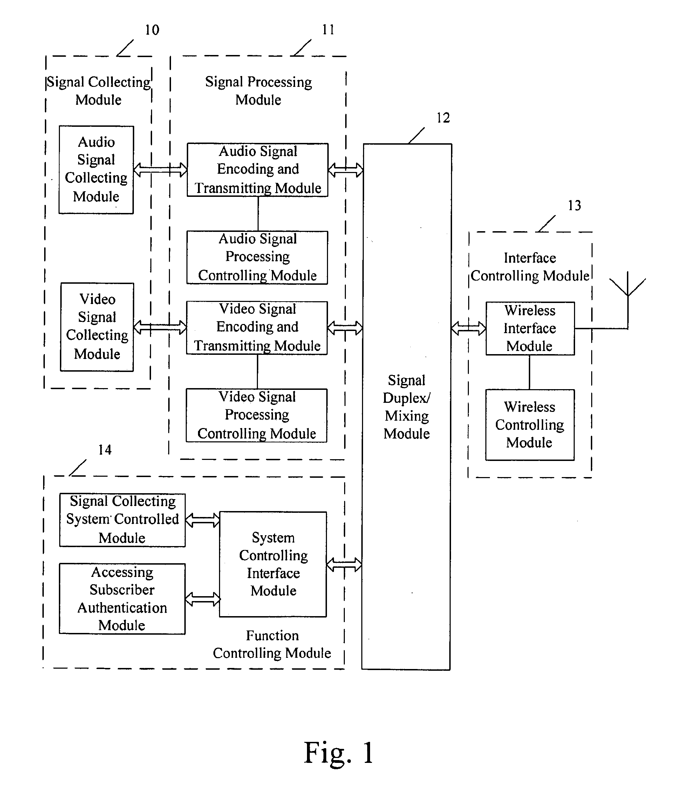

As shown in Fig. 1, the mobile monitor-collecting terminal in the embodiment of the present invention mainly comprises: a signal collecting module 10, a signal processing module 11, a signal duplex/mixing module 12, an interface controlling module 13 and a function controlling module 14. The signal duplex/mixing module 12, which serves as the controlling and switching center of the whole terminal, accomplishes duplex/mixing i.e. cross connection and transmission of the service data information including the audio signals and video signals, and the controlling information including the controlling signals. In other words, the signal duplex/mixing module 12 is applied to realize information interaction between the terminal's internal modules and external devices as well as information interaction among the terminal's internal modules. The signal collecting module 10, comprising an audio signal collecting module and a video signal collecting module, serves to collect audio and/or video signals, wherein the audio signal collecting module can be a microphone, and the video signal collecting module can be a common video camera or a video camera with a turntable. The signal processing module 11, comprising an audio signal coding and transmitting module and an audio signal processing controlling module as well as a video signal coding and transmitting module and a video signal processing controlling module, serves to encode and transmit the collected audio and video signals. The interface controlling module 13, comprising a wireless interface module and a wireless interface controlling module, serves to accomplish the wireless mobile access to the wireless mobile communication network, and transmit the audio/video signals processed by the signal duplex/mixing module via the wireless mobile communication network, and receive the controlling signals from the wireless mobile communication network. The function controlling module 14, comprising a signal collecting system controlled module, an accessing subscriber authentication module and a system controlling interface module, serves to authenticate the calling terminals for the mobile monitor-collecting terminal as well as to realize various controlling functions. To be specific, the signal collecting system controlled module receives the external controlling signals via the signal duplex/mixing module 12, and controls the associated devices in the signal collecting module 10 to accomplish the corresponding operations. The controlling instructions can also be sent to the signal processing module 11 via the signal duplex/mixing module 12. The signal collecting module 10, the signal processing module 11, the interface controlling module 13 and the function controlling module 14 are all functional modules of the mobile monitor-collecting terminal, while the signal duplex/mixing module 12 is the system's internal bus or switching module, serving to deliver and switch the associated controlling information and service data information.

In the embodiment of the present invention, the mobile monitor-collecting terminal is placed in the serving area of the wireless mobile communication network, and at the place that the user wants to monitor, for instance, on the monitored objects or in the monitored region. The mobile monitor-collecting terminal's working principles are as follows. Firstly, the mobile monitor-collecting terminal collects, encodes, saves and transfers the audio/video signals of the monitored targets with coordinated operation of the video signal collecting module such as a video camera, the video signal coding and transmitting module and the video signal processing controlling module, as well as the audio signal collecting module such as a microphone, the audio signal encoding and transmitting module and the audio signal processing controlling module. Secondly, the signal duplex/mixing module transmits the audio signals, video signals and control signals to be transmitted. The input/output of the signal duplex/mixing is the corresponding audio/video streaming media signals and controlling signals. In other words, if the input is audio and video signals, the corresponding output is audio/video media stream outputted to the wireless mobile communication network via the wireless interface module; if the input is controlling signals which are generally from external devices, the corresponding output is controlling signals outputted to the signal collecting system controlled module. At the same time, the signal collecting system controlled module and the system controlling interface module carry out authentication of the calling user and achieve the controlling function of the terminal. In the case hereof, the calling user is authenticated according to the calling user's ID, such as the calling subscriber or other unique identifier, which is transmitted from the network. The calling user can also be authenticated in the way that the calling user's ID and password is requested. The controlling function of the terminal refers to receiving the controlling instructions and controlling the audio/video signal collecting module of the mobile monitor-collecting terminal to carry out associated operations, such as switching on or switching off audio signals, adjusting volume of audio signals, adjusting direction/angle/focal length of video signals. The instructions are sent by the calling user at the remote end via a mobile handset such as a mobile phone which is connected to the mobile communication network and have passed the authentication, or via wireless mobile devices of other types such as a wireless mobile vehicle-borne device which is connected to the mobile communication network and have passed the authentication, or via a fixed terminal such as a PC which is connected to the Internet and have passed authentication. The wireless interface module and the wireless interface controlling module serve to connect the mobile monitor-collecting terminal to the accessed wireless network, for instance, GSM/GPRS/EDGE, CDMA, WCDMA, CDMA2000 or TD-SCDMA. Thereafter, the signal duplex/mixing module transmits the encoded or compressed audio and video signals to the device that demands the information of the monitored targets via the currently accessed wireless network.

Actually, the mobile monitor-collecting terminal in the embodiment of the present invention at least has the technical functions listed hereunder: a data/voice communication interface to a wireless mobile communication network for realizing real-time wireless communication, which supports wireless accessing modes including but not limited to GSM/GPRS/EDGE, CDMA, CDMA2000, WCDMA, and TD-SCDMA; real-time multimedia data delivery functions based on the protocols including but not limited to H.324/H.245/H.223, or H.323/H.245, or SIP, or RTP/RTCP/UDP/IP; video signal collecting and encoding functions, which are adaptable for wireless environments, based on the video encoding protocols including but not limited to MPEG-4, H.261, H.263, H.263+ and H.264; audio signal collecting and encoding functions, which are adaptable for wireless environments, based on the audio encoding protocols including but not limited to EVRC, 3GPP-AMR, G.711, G.725, G.726, G.723.1, G.729 and G.729A; and functions of authenticating the calling user and auto reply to the calling user. The mobile monitor-collecting terminal has SIM card or UIM card as its unique terminal ID, and the card is integrated with the terminal or separable from the terminal.

The mobile monitor-collecting terminal in the embodiment of the present invention can have the expanded functions listed hereunder: controlled functions of the audio/video collecting module, for instance, controlled functions of the video camera's turntable with which the video collecting module is able to change the video camera's shooting direction, angle and focal length according to the controlling instructions; and, the controlled functions of the audio signals with which the audio collecting module is able to adjust the volume of the collected audio signals according to the control instructions; and location positioning function of the wireless mobile communication terminals.

The mobile monitor-collecting terminal in the embodiment of the present invention is in fact a wireless mobile terminal device. Therefore, when a mobile monitor-collecting terminal is placed on mobile monitored objects, it is kept in the accessible serving area and is able to carry out continuous monitoring on the moving objects as well as their surroundings and information collection thereof, as long as the monitored object moves within the area covered by the wireless mobile communication network. In this case, the mobile monitor-collecting terminal can be combined with the location-based service of the wireless mobile communication network so as to achieve accurate positioning of the monitored moving object while carrying out a real-time monitoring on the monitored object.

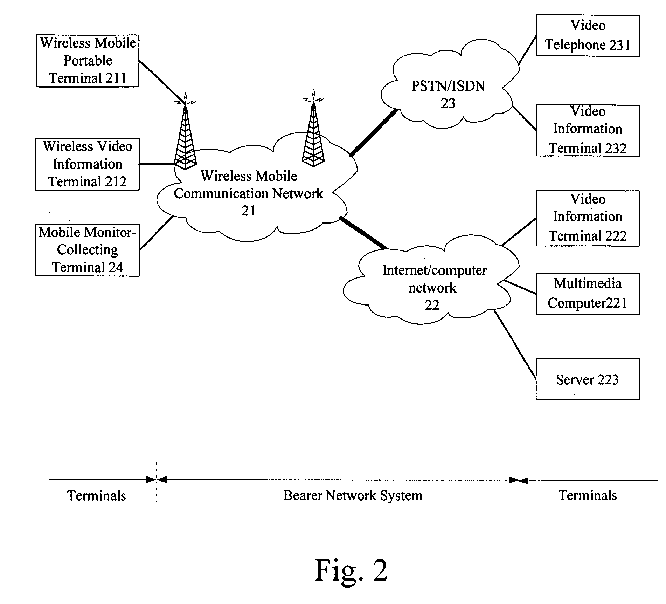

The embodiment of the present invention also provides a related communication system that is able to realize audio/video monitoring service based upon the aforesaid mobile monitor-collecting terminal, and the communication system's composition is shown in Fig. 2. The physical carrier of the audio/video monitoring service mainly comprises three parts: the bearer network system, one or plural mobile monitor-collecting terminal(s), and one or plural service controlling terminal(s). Of which, the bearer network system takes the wireless mobile communication network 21 as the main platform realizing the service, i.e., it at least includes the wireless mobile communication network 21. The bearer network system can also include wired communication networks, for instance, the Internet/computer network 22, and/or a wired telephone network. As the physical bearer entity of the audio/video monitoring service, the bearer network system is able to bear circuit switching and/or packet switching, and is able to deliver video information and the associated controlling information. In the case hereof, the wireless mobile communication network 21 can be GSM, CDMA, GPRS, EDEG, CDMA2000, WCDMA, or TD-SWCDMA; the Internet/computer network refers to various computer networks realizing inter-network connection, at least including the Internet, and/or LAN, and/or MAN, and/or WAN; the wired telephone network refers to the public wired telephone network, including PSTN, and/or ISDN 23.

The service controlling terminal refers to the wired/wireless controlling and monitoring terminal which is able to display audio/video and send controlling information. The service controlling terminal is the calling party, and it is the destination end, i.e. the controlling and monitoring device, of this audio/video monitoring service. The service controlling terminal can either be a standard wireless mobile terminal device such as a wireless mobile portable terminal 211 or some other wireless video information terminal 212, which is connected to the wireless mobile communication network, or a multimedia computer 221, a video information terminal 222 or a server 223 that is connected to the Internet/computer network 22, or a video telephone 231 or a video Information terminal 232 that is connected to PSTN/ISDN 23.

As the source end of this audio/video monitoring service, i.e. the monitor-collecting device at the called party, the mobile monitor-collecting terminal 24 is a special mobile audio/video monitor-collecting terminal connected to the wireless mobile communication network. This mobile monitor-collecting terminal 24 is the core part realizing the embodiment of the present invention's communication system, and it has functions of collecting audio/video signals, accessing standard wireless mobile communication network, positioning wireless mobile terminals and being controlled such as controlling the turntable of a multimedia conference TV video camera and etc.

It should be noted that, in light of the audio/video monitoring service achieved in the embodiment of the present invention, the mobile monitor-collecting terminal ,which transmits the information it has collected to the end that demands the monitoring information, is the source end of the service; the receiving end including the service controlling terminal, which passively receives the audio/video monitoring information sent from the mobile monitor-collecting terminal in the whole process of the monitoring service, is the destination end the of the service.

In the communication system illustrated in Fig. 2, when a service controlling terminal needs to activate the monitor-collecting functions of a mobile monitor-collecting terminal, the service controlling terminal initiates a call to the target mobile monitor-collecting terminal via its home communication network and the wireless mobile communication network, i.e., it sends a service activating request to activate the monitor-collecting function. The mobile monitor-collecting terminal starts to collect the audio/video information of its monitored target and/or the surrounding area after it receives the service activating request, and returns the collected information to the service controlling terminal or the designated terminal. In the case hereof, if there are plural mobile monitor-collecting terminals, every service controlling terminal can send a service activating request to anyone or plural of the mobile monitor-collecting terminals. If the home network of the service controlling terminal is the wireless mobile communication network, the service controlling terminal interacts with the mobile monitor-collecting terminal just via the wireless mobile communication network. The service controlling terminal can be a terminal that demands the information of the monitored object and/or area, or a terminal other than the one that demands the information of the monitored object and/or area. Correspondingly, the collected audio/video information can be returned to the service controlling terminal or sent to the designated terminal, and the designated terminal's address can be sent to the mobile monitor-collecting terminal by the service controlling terminal when the audio/video monitoring service is activated. The service controlling terminal can send service release request to the mobile monitor-collecting terminal at any moment to stop monitoring the monitored object or area.

The embodiment of the present invention also discloses a related method realizing the audio/video monitoring service based on the aforesaid mobile monitor-collecting terminal and the audio/video monitoring service communication system. The audio/video monitoring service must pass three steps of service application, service activation and service execution in the actual operating process. In the case hereof, the service application refers to that the user must submit his application to the audio/video monitoring service provider or network operator, and is provided with a mobile monitor-collecting terminal that has accomplished its ID card service attribute configuration and network configuration subject to the ratification of his service application before he can use the audio/video monitoring service. The service attribute configuration refers to configuring the user's initial password, configuring the circuit switching service attribute and/or the packet switching service attribute, and etc. The network configuration refers to designating the mobile monitor-collecting terminal's subscriber, configuring the service's network attribute and authority, and etc. The service activation refers to that, after the user gets the mobile monitor-collecting terminal with accomplished service attribute configuration and network configuration from the service provider or network operator, he should place the mobile monitor-collecting terminal in the area or on the object to be monitored within the region covered by the operator's wireless mobile communication service before the user can activate the audio/video service to achieve real-time monitoring of the area or object. Before the service is activated or during its operating period, the user can modify the user's accessing authentication password for the service to keep it private. The service execution refers to that, after the service application and activation have been accomplished, the service controlling terminal can activate the audio/video monitoring service at any place or at any moment. Having received the service release request sent by the service controlling terminal, the mobile monitor-collecting terminal stops monitoring the target object or area and collecting the audio/video signals thereof, while the bearer network terminates the current connection and releases the associated resources. In the aforesaid three steps, the first two steps are the preconditions to actually realize the audio/video monitoring service. How to accomplish the audio/video monitoring service, how to achieve monitoring of the target object and how to obtain the audio/video information of the monitored target object are all included in the third steps.

Therefore, a detailed description of the service execution step is hereafter provided in reference to the attached drawings. The method is based on the communication system comprising the bearer network at least including the wireless mobile communication network, at least one service controlling terminal and at least one mobile monitor-collecting terminal. The basic idea of the embodiment of the present invention's method comprises: the service controlling terminal initiates a call to the target mobile monitor-collecting terminal via the bearer network, i.e., it sends a service activating request to activate the monitor-collecting function; After the authentication, the mobile monitor-collecting terminal receiving the service activating request starts to collect the audio/video information of its monitored target object and/or the surrounding area, and sends the collected information to the terminal that demands the audio/video information of the monitored target object. Of which, the terminal that demands the audio/video information of the monitored target object can be the service controlling terminal or a valid designated terminal.

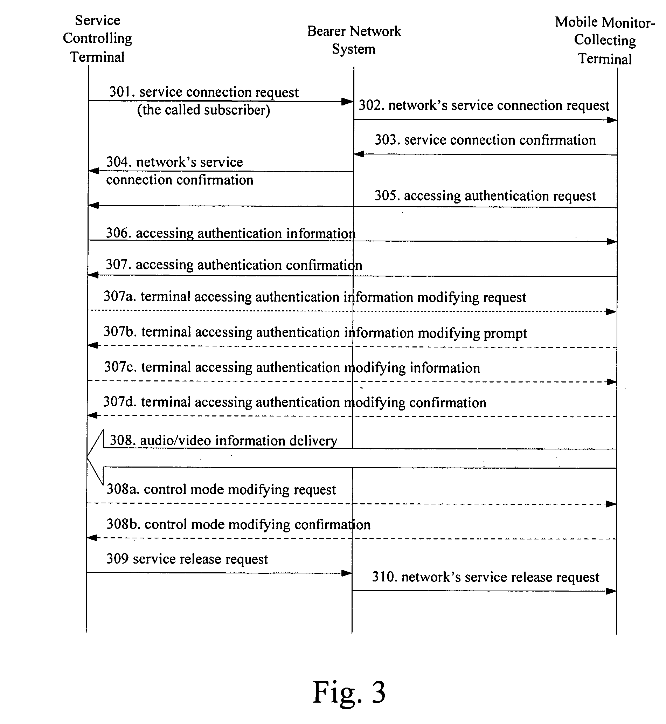

Now taking the case that the service controlling terminal is the terminal demanding the monitoring information as an example, as shown in Fig. 3, the method disclosed by the embodiment of the present invention specifically comprises:
Step 301: The user that needs to activate the audio/video monitoring service sends to the bearer network system a service connection request carrying the subscriber/ID of the target mobile monitor-collecting terminal, i.e., the called mobile monitor-collecting terminal, to request the network to build up service connection for him.

The user sends the service connection request with his service controlling terminal.
Step 302: The bearer network system sends the service connection request to the called mobile monitor-collecting terminal, according to the subscriber/ID of the called mobile monitor-collecting terminal carried in the service connection request, to build up service connection from the service controlling terminal to the called mobile monitor-collecting terminal.
Step 303: The called mobile monitor-collecting terminal sends to the bearer network system a service connection confirming message to confirm that the service connection between the called mobile monitor-collecting terminal and the bearer network system is successfully built up.
Step 304: The bearer network system sends to the calling service controlling terminal the service connection confirming message to confirm that the service connection between itself and the calling service controlling terminal is successfully built up.
Step 305: Before the monitoring service is activated, in order to verify the validity of the calling user, the called mobile monitor-collecting terminal sends to the calling service controlling terminal an accessing authentication request to request the calling service controlling terminal to return the authentication information.
Step 306: The calling service controlling terminal sends to the called mobile monitor-collecting terminal its accessing authentication password information so that the calling terminal can pass the accessing authentication.
Step 307: The called mobile monitor-collecting terminal confirms the correct accessing authentication password information of the calling service controlling terminal, and activates delivery functions of audio/video service stream. If the accessing authentication password information is not correct, the called mobile monitor-collecting terminal refuses to provide delivery functions of audio/video service stream to the current calling service controlling terminal, and releases the service connection.

In Step 307, if the calling service controlling terminal wants to modify its accessing authentication password information after the called mobile monitor-collecting terminal has confirmed the correct accessing authentication password information of the calling service controlling terminal, Step 307 further comprises:
Step 307a: The service controlling terminal sends to the called mobile monitor-collecting terminal an accessing authentication password information modifying request via the built-up end-to-end service connection, requesting to modify the accessing authentication password information;
Step 307b: Having received the accessing authentication password information modifying request, the called mobile monitor-collecting terminal returns a group of prompt information for modifying the terminal accessing authentication password information for guiding the calling user to deliver the modified accessing authentication password and confirming information;
Step 307c: According to the prompt information for modifying the accessing authentication password information returned by the called mobile monitor-collecting terminal, the calling service controlling terminal sends the corresponding accessing authentication password modifying information to modify the accessing authentication password and confirmation information;
Step 307d: Having received the complete access authentication password modifying information and verified its validity, the called mobile monitor-collecting terminal sends a verifying notification message to the calling service controlling terminal, and terminates the process of modifying the accessing authentication password information.
Step 308: The called mobile monitor-collecting terminal provides the audio/video monitoring service with audio/video information delivery functions to the legal user having passed the authentication.

In Step 308, if the calling service controlling terminal wants to modify the audio/video controlling mode of the mobile monitor-collecting terminal while the called mobile monitor-collecting terminal is providing the audio/video monitoring service with audio/video information delivery functions to the legal user having passed the authentication, Step 308 further comprises:
Step 308a: When the user wants to modify the audio/video control mode of the called mobile monitor-collecting terminal, for instance, to adjust the video camera's angle, direction, focal length or volume of the microphone, or to switch on and switch off the microphone, the calling service controlling terminal sends to the called mobile monitor-collecting terminal an audio/video controlling mode modifying request, carrying the controlling mode modifying information to control and adjust the associated parts;
Step 308b: Having received the controlling mode modifying request from the calling service controlling terminal, the called mobile monitor-collecting terminal accomplishes controlling and adjusting of the associated parts according to the controlling mode modifying information carried in the request, then returns to the calling service controlling terminal the corresponding verifying notification message.
Step 309: When the calling service controlling terminal wants to terminate the audio/video monitoring service, the calling service controlling terminal sends to the bearer network system a service release request and releases the local resources;
Step 310: Having received the service release request from the calling service controlling terminal, the bearer network system releases the network resources and simultaneously forwards the service release request to the called mobile monitor-collecting terminal, which terminates the service connection and releases all the associated resources after receiving the service release request.

The initiating and withdrawing process of the audio/video monitoring service can be deployed in advance by the service provider such as the network or service operator according to his regulations and service opening strategies. The charging principles for the audio/video monitoring service can be specified by the service provider such as the network or service operator, according to the associated laws and his marketing strategies.

In the embodiment of the present invention, there exist several different cases in the implementation process of the audio/video monitoring service:

### Embodiment 1:

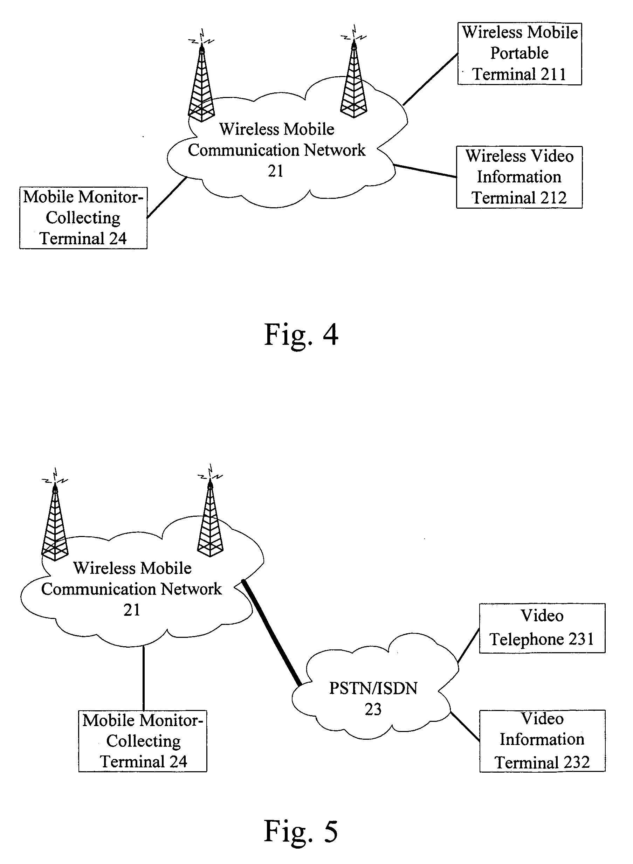

In this embodiment, the service controlling terminal is a wireless mobile device, for instance, a wireless mobile portable terminal (a mobile phone) 211 or some other wireless video information terminal 212 as illustrated in Fig. 4, and the bearer network comprises just a wireless mobile communication network 21.

As illustrated in Fig. 4, the process of realizing the audio/video monitoring service with a wireless mobile device comprises: The service user sends a service connection request by dialing the subscriber or the unique ID of the mobile monitor-collecting terminal with his wireless mobile device; the subscriber or the unique ID is configured by the operator at service activation; after the network accomplishes connection between the calling party and the called party, the called mobile monitor-collecting terminal 24 first carries out authentication of the calling user, and only the users passing the authentication are regarded legal for the service; the called mobile monitor-collecting terminal 24 accomplishes the final end-to-end service connection request for the legal user so as to achieve real-time audio/video media stream connection and delivery. Thereafter, the calling wireless mobile portable terminal 211 or the calling wireless video information terminal 212 can get the audio/video information collected by the called mobile monitor-collecting terminal 24, i.e., the audio/video monitoring service is in operating state. The legal user can terminate the audio/video monitoring service by terminating the service connection with his wireless mobile portable terminal 211 or his wireless video information terminal 212.

The authentication of the calling user can be achieved by the called mobile monitor-collecting terminal 24 according to the calling user's ID, for instance the calling subscriber or other unique ID, sent by the network, or by the called mobile monitor-collecting terminal 24 requesting the calling user to send his user ID and password for authentication. In the operating process of the audio/video monitoring service, with a key or a specific key combination on his portable device or other devices, a legal user can also carry out the controls hereafter over the called mobile monitor-collecting terminal 24 at the remote end: modification of the calling user's accessing authentication password; control of audio stream, such as volume adjustment, switch-on and switch-off; control of video stream, such as video collector's angle, direction and focal length. The audio/video monitoring service can either be executed in circuit switching mode in the circuit domain of the wireless mobile communication network 21, or be executed in packet switch mode in the packet domain of the wireless mobile communication network 21. In some cases, there might exist a part of or even none of the foregoing functions.

### Embodiment 2:

In this embodiment example, the service controlling terminal is a fixed terminal device, for instance, a video telephone 231 or other video information terminal 232, as illustrated in Fig. 5, and the bearer network comprises a wireless mobile communication network 21 and PSTN/ISDN 23.

As illustrated in Fig. 5, the process of realizing the audio/video monitoring service with a fixed terminal device is: The service user dials the subscriber or the unique ID of the mobile monitor-collecting terminal 24, which has been configured by the operator at the service activation, via a fixed terminal device in PSTN/ISDN 23, for instance, a video telephone 231 or a video information terminal 232, in PSTN/ISDN 23; after the networks accomplishes connection between the calling party and the called party, the called mobile monitor-collecting terminal 24 first carries out authentication of the calling user, and only the users passing the authentication are regarded legal for the service; the called mobile monitor-collecting terminal 24 accomplishes the final end-to-end service connection request for the legal user so as to achieve real-time audio/video media stream connection and delivery. Thereafter, the calling video phone 231 or the calling video information terminal 232 can get the audio/video information collected by the called mobile monitor-collecting terminal 24, i.e., the audio/video service is in operating state. The legal user can terminate the audio/video monitoring service by terminating the service connection with his fixed terminal device.

Similarly, in the operating process of the audio/video device, with a key or a specific key combination or a specific functional key on his fixed terminal device, a legal user can also carry out the functional controls hereafter over the called mobile monitor-collecting terminal 24 at the remote end: modification of the calling user's accessing authentication password; control of audio stream, such as volume adjustment, switch-on and switch-off; control of video stream, such as video collector's angle, direction and focal length. The audio/video monitoring service can either be executed in circuit switching mode in the circuit domain of the wireless mobile communication network 21 and PSTN/ISDN 23, or be executed in packet switching mode in the packet domain of the two networks.

### Embodiment 3:

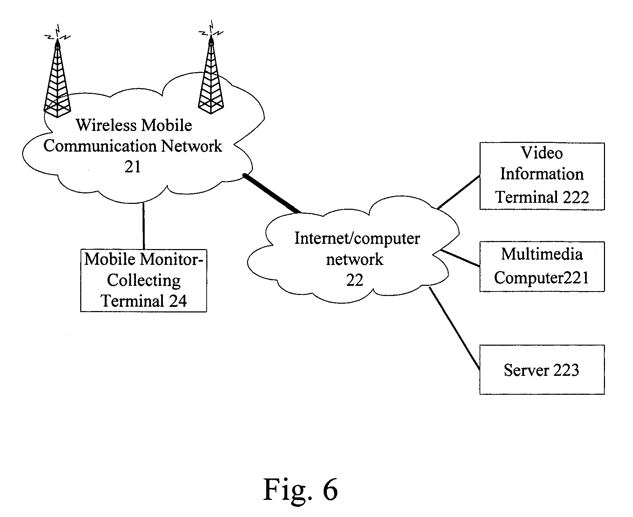

In this embodiment, the service controlling terminal is a fixed terminal device, for instance, a video information terminal 222, or a multimedia computer 221 or a server 223 as illustrated in Fig. 6, and the bearer network comprises a wireless mobile communication network 21 and an Internet/computer network 22.

As illustrated in Fig. 6, the process to achieve the audio/video monitoring service with a fixed terminal device is: The service user uses the Internet terminal device, for instance, the multimedia computer 221, the video information terminal 222 or the server 223 to connect with mobile monitor-collecting terminal 24 configured by the operator at the service activation; after the networks accomplishes connection between the calling party and the called party, the called mobile monitor-collecting terminal 24 first carries out authentication of the calling user, and only the users passing the authentication are regarded as legal for the service. Then the called mobile monitor-collecting terminal 24 accomplishes the final end-to-end service connection request for the legal user so as to achieve real-time audio/video media stream connection and delivery. Thereafter, the calling terminal device can get or record the audio/video information collected by mobile monitor-collecting terminal 24, i.e., the audio/video service is in operating state. The legal user can terminate the audio/video monitoring service by terminating the service connection with his terminal device.

Similarly, in the operating process of the audio/video device, with a key or a specific key combination or a specific functional key on his fixed terminal device, a legal user can also carry out the functional controls hereafter over the called mobile monitor-collecting terminal 24 at the remote end: modification of the calling user's accessing authentication password; control of audio stream, such as volume adjustment, switch-on and switch-off; control of video stream, such as video collector's angle, direction and focal length. In this case, the audio/video monitoring service is executed in packet switching mode in the packet domain of the wireless mobile communication network.

Fig. 6 also indicates that the audio/video monitoring service can be achieved via the server 223 in the Internet, i.e., the service user can connect with mobile monitor-collecting terminal 24, which is configured by the operator at the service activation, via the server 223 in the Internet. The connection request can be generated by the server 223 according to the service activating time preset in the server 223 by the legal user. After the network accomplishes connection between the called terminal, i.e., the mobile monitor-collecting terminal, and the server 223 in the network, the called mobile monitor-collecting terminal 24 firstly carries out authentication of the service user. Only the calling users passing the authentication are regarded legal for the service, whose directory at the server 223 is permitted to save the monitoring audio/video information in. After the final service connection request of the legal service user is accomplished, a real-time audio/video media stream connection and delivery is achieved between the legal service user's directory at the server 223 and the called mobile monitor-collecting terminal, with the audio/video information collected by the called mobile monitor-collecting terminal 24 saved in the legal service user's directory at the server 223. At the moment, the audio/video service is in operating state. The service terminating request can be generated by the server 223 according to the service terminating time preset in the server 223 by the legal user. after the server 223 sends the service terminating request according to the terminating value, the network releases the service connection, and the audio/video monitoring service executing process comes to an end. In this case, the audio/video monitoring service is executed in packet switching mode in the packet domain of the wireless mobile communication network.

As a summary of the foregoing conditions, the application types of the embodiment of the present invention comprise:
A) A wireless mobile phone user connects the mobile monitor-collecting terminal via a wireless mobile communication network to monitor the target surroundings. The embodiments of this application type include: real-time monitoring and positioning of important property for individuals, for instance, monitoring of houses, rooms or moving vehicles.
B) Fixed users (companies or individuals) connect the mobile monitor-collecting terminal via an Internet/fixed communication network and a wireless mobile communication network to achieve real-time monitoring and positioning of the targets. The embodiments of this application type include: monitoring of fixed targets such as fixed surroundings including finance offices, archives, or fixed objects including safes and file cabinets; or monitoring and positioning of moving targets such as moving objects including cash in-transit vehicles/escorted valuable property carrying vehicle by financial/property insurance companies.
C) Fixed users (companies) connect the mobile monitor-collecting terminal via an Internet/fixed communication network and wireless mobile communication network to achieve real-time monitoring of the targets. However, the real-time monitoring information is stored on specific storage media. The storage media and the monitored targets can be located at different places. The users can access the monitoring information stored on the specific storage media at any time. The embodiments of this application type include: real-time monitoring, due to safety or security reasons, of some fixed targets such as the fixed objects or surroundings that should be monitored, or some moving targets such as the moving objects that should be monitored, including vehicles and ships. The embodiment in this case is equivalent to a black box which especially fits full-range security monitoring of vehicles and ships by shipping companies and long-distance bus companies.

The foregoing description is only a preferred embodiment of this invention and is not for use in limiting the protection scope thereof.

## Claims

1. A mobile monitor-collecting terminal, comprising:
a signal collecting module, which further comprises an audio collecting module and a video collecting module, and which serves to collect audio/video signals of a monitored target and to deliver the collected audio/video signals to a signal processing module;
the signal processing module, which further comprises an audio signal encoding and transmitting module, an audio signal processing controlling module, a video signal encoding and transmitting module and a video signal processing controlling module, and which serves to encode the collected audio/video signals and to transmit the processed audio/video signals via a signal duplex/mixing module and an interface controlling module;
the signal duplex/mixing module, which serves to carry out duplex, switching and transmission of the received service data information, including audio signals and video signals, and controlling information;
the interface controlling module, which serves to transmit the audio/video signals processed by the signal duplex/mixing module via the wireless mobile communication network and to receive controlling signals from the wireless mobile communication network;
a function controlling module, which further comprises an accessing subscriber authentication module and a system controlling interface module, and which serves to accomplish authentication and controlling functions;
the signal processing module, the interface controlling module and the function controlling module are directly connected with the signal duplex/mixing module.

2. The mobile monitor-collecting terminal according to Claim 1, wherein the function controlling module further comprises a signal collecting system controlled module that controls the audio signal collecting module and/or video signal collecting module to accomplish related operations according to controlling instructions.

3. The mobile monitor-collecting terminal according to Claim 1 or 2, wherein the audio signal collecting module is a microphone.

4. The mobile monitor-collecting terminal according to Claim 1 or 2, wherein the video signal collecting module is a common video camera or a video camera with a turntable.

5. The mobile monitor-collecting terminal according to Claim 2, wherein the related operation is adjusting the volume of audio signals while the audio signal collecting module is a microphone.

6. The mobile monitor-collecting terminal according to Claim 2, wherein the related operations are adjustment of the video camera's shooting direction, and/or, shooting angle and/or shooting focal length while the video signal collecting module is a video camera with a turntable.

7. The mobile monitor-collecting terminal according to Claim 1 or 2, wherein the monitored target comprises at least one of: a fixed or moving object, and a specific area.

8. The mobile monitor-collecting terminal according to Claim 1 or 2, wherein the wireless access modes supported by the interface controlling modules include but are not limited to GSM/GPRS/EDGE, CDMA, CDMA2000, WCDMA, and TD-SCDMA.

9. The mobile monitor-collecting terminal according to Claim 1 or 2, wherein the encoding modes supported by the video signal collecting module and the video signal encoding and transmitting module include but are not limited toMPEG-4, H.261, H.236, H.236+, H.264 video encoding protocols.

10. The mobile monitor-collecting terminal according to Claim 1 or 2, wherein the encoding modes supported by the audio signal collecting module and the audio signal encoding and transmitting module include but are not limited to EVRC, 3GPP-AMR, G.711, G.725, G.726, G.723.1, G.729, G.729A audio encoding protocols.

11. The mobile monitor-collecting terminal according to Claim 1 or 2, wherein the controlling or bearer protocols supported by the monitor-collecting terminal include but are not limited to H.324/H.245/H.223 protocol, or H.323/H.245 protocol, or SIP, or RTP/RTCP/UDP/IP.

12. A communication system realizing audio/video monitoring service, comprising: a wireless mobile communication network, and further comprising:
at least one mobile monitor-collecting terminal, which serves to collect audio/video signals of a monitored target and to deliver the collected audio/video information to device(s) demanding the audio/video information of the monitored target via a wireless mobile communication network, and which is placed where the monitored target is;
one or plural service controlling terminal(s), which serve(s) to activate or terminate the mobile monitor-collecting terminal's monitoring the monitored target and collecting the audio/video signals thereof.

13. The communication system according to Claim 12, wherein the service controlling terminal is a wireless mobile terminal with audio/video displaying function.

14. The communication system according to Claim 12, further comprising: a wired communication network, which is connected with the wireless communication network, and is simultaneously connected with one or plural wired communication terminal(s).

15. The communication system according to Claim 14, wherein the wired communication network comprises at least one of: Internet/computer network, and wired telephone network.

16. The communication system according to Claim 14, wherein the wired telephone network is Public Switch Telephone Network (PSTN) and/or Integrated Service Digital Network (ISDN).

17. The communication system according to Claim 14, 15 or 16, wherein the service controlling terminal comprises at least one of: a wireless mobile terminal with audio/video displaying function, and a wired communication terminal with audio/video displaying function.

18. The communication system according to Claim 14, 15 or 16, wherein the service controlling terminal interacts with the mobile monitor-collecting terminal via its home wired communication network and the wireless mobile communication network while the service controlling terminal is a wired communication terminal with audio/video displaying function.

19. The communication system according to any of Claims 12~16, wherein the wireless mobile communication network is GSM, CDMA, GPRS, EDGE, CDMA2000, CDMA2000 1X, or WCDMA, or TD-SCDMA.

20. The communication system according to any of Claims 12 to 16, wherein the device demanding the audio/video information of the monitored target is the service controlling terminal that activates the corresponding mobile monitor-collecting terminal.

21. A method realizing audio/video monitoring service, which is applicable to a communication system comprising a bearer network at least including a wireless mobile communication network, at least one service controlling terminal and at least one mobile monitor-collecting terminal, wherein the mobile monitor-collecting terminal is placed where the monitored target is, comprising:
a. the service controlling terminal sending a service activating request to the target mobile monitor-collecting terminal via the bearer network;
b. the mobile monitor-collecting terminal receiving the service activating request carrying out authentication and starting to monitor its target and collect audio/video information thereof, and returning the collected audio/video information to device(s) demanding the audio/video information of the monitored target.

22. The method according to Claim 21, wherein Step a specifically comprises:
a1. the service controlling terminal sends to the bearer network a service connection request carrying a subscriber/ID of the target mobile monitor-collecting terminal;
a2. the bearer network sends the service connection request to the target mobile monitor-collecting terminal, according to the subscriber/ID of the mobile monitor-collecting terminal carried in the service connection request, to build up service connection from the service controlling terminal to the called mobile monitor-collecting terminal;
a3. the called mobile monitor-collecting terminal sends to the bearer network a service connection confirming message;
a4. the bearer network returns to the service controlling terminal the service connection confirming message;
the authentication in Step b specifically comprises:
b1. the mobile monitor-collecting terminal sends to the service controlling terminal an accessing authentication request before it starts to monitor its target;
b2. having received the accessing authentication request, the service controlling terminal sends to the mobile monitor-collecting terminal its accessing authentication password information;
b3. the mobile monitor-collecting terminal verifies the access authentication password information of the service controlling terminal, and if the verification is successful, it activates delivery of audio/video service stream so as to provide the audio/video information of the monitored target to the device demanding the information of the monitored target; otherwise, it refuses to deliver the audio/video service stream and releases the service connection.

23. The method according to Claim 21 or 22, further comprising:
the service controlling terminal sending to the mobile monitor-collecting terminal a service release request and releasing the local resources; the mobile monitor-collecting terminal terminating the service connection and releasing the associated resources after it receives the service release request.

24. The method according to Claim 21 or 22, further comprising after the service controlling terminal authentication is successful:
b11. the service controlling terminal sending to the mobile monitor-collecting terminal a terminal accessing authentication password information modifying request via the built-up service connection;
b12. the mobile monitor-collecting terminal returning a group of prompt information for modifying the terminal accessing authentication password information after it receives the service controlling terminal's access authentication password information modifying request;
b13. according to the prompt information for modifying the accessing authentication password information returned by the mobile monitor-collecting terminal, the service controlling terminal sending the corresponding accessing authentication password modifying information to modify the accessing authentication password and confirmation information;
b14. having received the complete access authentication password modifying information and verified its validity, the mobile monitor-collecting terminal sending to the service controlling terminal a verifying notification message, and terminating the process of modifying the accessing authentication password information.

25. The method according to Claim 24, further comprising after the service controlling terminal authentication is successful:
b21. the service controlling terminal sending to the mobile monitor-collecting terminal an audio/video controlling mode modifying request, carrying the controlling mode modifying information;
b22. the mobile monitor-collecting terminal receiving the service controlling terminal's controlling mode modifying request and accomplishing controlling and adjustment of the associated parts according to the controlling mode modifying information carried in the request, then returning to the service controlling terminal a corresponding verifying notification message.

26. The method according to Claim 24, further comprising:
the service controlling terminal sending to the mobile monitor-collecting terminal a service release request and releasing the local resources; the mobile monitor-collecting terminal terminating the service connection and releasing the associated resources after it receives the service release request.

27. The method according to Claim 21 or 22, further comprising after the service controlling terminal authentication is successful:
b21. the service controlling terminal sending to the mobile monitor-collecting terminal an audio/video controlling mode modifying request, carrying the controlling mode modifying information;
b22. the mobile monitor-collecting terminal receiving the service controlling terminal's controlling mode modifying request and accomplishing controlling and adjustment of the associated parts according to the controlling mode modifying information carried in the request, then returning to the service controlling terminal a corresponding verifying notification message.

28. The method according to Claim 27, further comprising:
the service controlling terminal sending to the mobile monitor-collecting terminal a service release request and releasing the local resources; the mobile monitor-collecting terminal terminating the service connection and releasing the associated resources after it receives the service release request.

29. The method according to Claim 21 or 22, wherein, the device demanding the audio/video information of the monitored target is the service controlling terminal that sends the service activating request to the mobile monitor-collecting terminal.
